# EUROPÄISCHE PATENTANMELDUNG

(11) **EP 1 624 425 A1**
(43) Veröffentlichungstag der Anmeldung: **08.02.2006**
(21) Anmeldenummer: 05015832.8
(22) Anmeldetag: 21.07.2005
(51) Int. Cl.: G07G 1/00, A47F 9/04

(54) **Selbstbedienter Warenerfassungsplatz**

(30) Priorität: 02.08.2004 DE 102004037677
(71) Anmelder: Wincor Nixdorf International GmbH, 33106 Paderborn (DE)
(72) Erfinder: Baitz, Guenter, 13629 Berlin (DE)

(57) **Zusammenfassung**

Selbstbedienter Warenerfassungsplatz mit einer Abtasteinrichtung (14) für Barcode-Etiketten und/oder RFID-Etiketten und jeweils zumindest einer Waage (16, 18) vor und hinter der Abtasteinrichtung (14), wobei eine erste Waage als Bodenwaage (16) mit einer Aufnahme für einen Einkaufswagen (20) und die zweite Waage als Bandwaage (18) ausgebildet ist.

## Beschreibung

Die Erfindung betrifft einen selbstbedienten Warenerfassungsplatz für Warenverkaufsstätten. Sie geht aus von der US 4 787 467.

Aus der DE 40 39 377 A1 ist bereits bekannt, in Warenverkaufsstätten gekaufte und im allgemeinen in einem Warenkorb oder einem Einkaufswagen gesammelte Waren an Selbstbedienungs-Warenerfassungsplätzen zu erfassen und automatische Abrechnungen zu erstellen. Der Kunde bringt hierzu die von ihm gekauften Waren zu einem Warenerfassungsplatz und führt sie durch eine Abtasteinrichtung, die an den Waren angebrachte Barcode-Etiketten und/oder RFID-Etiketten abgetastet. Danach werden die Waren in eine Ablage gelegt, die auch ein weiterer Einkaufswagen sein kann und mit einer Waage gekoppelt ist. Beim Identifizieren der Waren durch Abtasten ihrer Etiketten ergibt sich der Warenpreis und das Warengewicht. Der Warenpreis wird an ein Kassensystem gemeldet und die Gewichtsinformationen einer Vergleichseinrichtung zugeführt. Wenn die Waren dann anschließend gewogen werden, kann das ermittelte Gewicht mit dem der Ware zugeordneten Gewichtsinformation verglichen werden. Stimmen die Vergleichsgrößen überein, kann ein Betrugsversuch ausgeschlossen werden.

Es ergibt sich bei dieser Vorgehensweise jedoch das Problem, dass das Warengewicht toleranzbehaftet ist, das heißt, dass es bei dem Vergleich der Gewichtsinformation mit dem durch Wiegen ermittelten Gewicht zu Fehlauswertungen kommen kann. Es ist deshalb bereits vorgeschlagen worden, vor der Abtasteinrichtung eine zweite Waage anzuordnen. Der Kunde muss dann die Waren Stück für Stück aus dem Warenkorb bzw. Einkaufswagen nehmen, auf die zweite Waage legen, durch die Abtasteinrichtung führen und anschließend in die Ablage legen. Diese umständliche Vorgehensweise findet bei Kunden wenig Akzeptanz.

In der US 4 787 467 ist deshalb vorgeschlagen worden, vor und hinter der Abtasteinrichtung eine Bodenwaage anzuordnen. Mit Hilfe der vor der Abtasteinrichtung befindlichen Waage wird das Gesamtgewicht eines ersten Einkaufswagens mit den gesammelten Waren ermittelt. Die Waren werden diesem Einkaufswagen einzeln entnommen, an der Abtasteinrichtung entlang geführt und in einem zweiten Einkaufswagen abgelegt, der auf der hinter der Abtasteinrichtung angeordneten Waage aufgestellt ist. Das Gesamtgewicht vor der Abtasteinrichtung muss mit dem Gesamtgewicht hinter der Abtasteinrichtung und mit dem aus den Gewichtsinformationen aller Waren kumulierten Gewicht übereinstimmen.

Nachteilig an dieser Anordnung ist jedoch, dass der nach Erledigung des Einkaufs leere erste Einkaufswagen im Wege steht und sich kein Kunde mehr für diesen Einkaufswagen zuständig fühlt. Dieser könnte zwar von einem nächsten Kunden auf die hinter der Abtasteinrichtung befindliche Bodenwaage geschoben werden. Dazu muss der Kunde aber seinen Einkauf verlassen und einige Rangierarbeit ausführen, was insbesondere älteren Personen schwer fallen dürfte. Hinzu kommt, dass von der Kundschaft eine andere Vorgehensweise als bei bedienten Kassenplätzen verlangt wird.

Aufgabe der Erfindung ist es, einen selbstbedienten Warenerfassungsplatz vorzuschlagen, der eine zuverlässige Kontrolle des Erfassungsvorganges erlaubt und dennoch einfach zu bedienen ist.

Die Aufgabe wird durch die Merkmale des Anspruchs 1 gelöst.

Der erfindungsgemäße selbstbediente Warenerfassungsplatz umfasst eine Abtasteinrichtung für Barcode-Etiketten und/oder RFID-Etiketten mit jeweils eine Waage vor und hinter der Abtasteinrichtung, wobei eine der Waagen eine Bodenwaage mit einer Aufnahme für einen Einkaufswagen ist und die andere als Bandwaage ausgebildet ist.

Die gesammelten Waren werden auf der vor der Abtasteinrichtung angeordneten Waage gewogen, einzeln an der Abtasteinrichtung entlang geführt und auf der hinter der Abtasteinrichtung angeordneten Waage abgelegt. Das Gesamtgewicht der Waren vor der Abtasteinrichtung muss mit dem kumulierten Gewicht aller Waren hinter der Abtasteinrichtung übereinstimmen. Es ist auch denkbar, die registrierte Gewichtsverminderung bei der Entnahme einer Ware von der vor der Abtasteinrichtung angeordneten Waage mit dem registrierten Gewicht der Ware auf einer Waage hinter der Abtasteinrichtung zu vergleichen. Stimmen die ermittelten Gewichte innerhalb eines Toleranzbereichs nicht überein, wird der Kunde aufgefordert, die zuletzt erfasste Ware erneut zu erfassen und/oder es wird eine Information an die Aufsicht des Warenverkaufsgeschäfts gegeben.

Gemäß einer ersten Ausprägung des Warenerfassungsplatzes ist die Bodenwaage vor der Abtasteinrichtung und die Bandwaage hinter der Abtasteinrichtung angeordnet, wobei sich an die Bandwaage eine Warensammelstelle anschließt. Der Kunde entnimmt wie gewohnt seine Waren, führt sie an der Abtasteinrichtung vorbei und stellt sie auf die Bandwaage. Diese stellt sich für den Kunden als Abförderband dar, wie er es von bedienten Kassenplätzen kennt.

Die Warensammelstelle mag ein Endlostransportband sein. Auf dieses Band werden die erfassten Waren abgestellt und durch den fortlaufenden Antrieb verdichtet, so dass eine große Packungsdichte und damit Aufnahmekapazität erreicht wird. Wenn ein Kunde seinen Einkaufswagen geleert hat, schiebt er diesen an das Ende des Endlostransportbandes und belädt ihn mit seinen erfassten Waren.

Alternativ dazu ist die Warensammelstelle als wenigstens eine Packmulde ausgebildet. Dadurch wird eine noch größere Aufnahmekapazität erreicht.

Bei mehreren Packmulden ist zweckmäßigerweise zwischen der Bandwaage und den Packmulden eine Weiche angeordnet. Dadurch wird der Warendurchsatz noch weiter verbessert: Wenn ein Kunde seinen Einkaufswagen geleert hat, schiebt er diesen wie gewohnt an die Packmulde, die seine Waren enthält.

Während er letztere zurück in seinen Einkaufswagen legt kann der nächste Kunde bereits mit dem Erfassen seiner Waren beginnen, die bei entsprechender Weichenstellung in eine andere Packmulde gelangen. Die Handhabung der Waren bei dieser Ausführung des erfindungsgemäßen Warenerfassungsplatzes ist der bei einem bedienten Kassenplatz sehr ähnlich.

Gemäß einer zweiten Ausprägung des Warenerfassungsplatzes ist die Warenflussrichtung gegenüber der ersten umgekehrt, d.h. die Bandwaage ist vor der Abtasteinrichtung und die Bodenwaage hinter der Abtasteinrichtung angeordnet, wobei sich vor der Bandwaage ein Aufgabeband befindet.

Der Kunde entnimmt seine Waren seinem Einkaufswagen und legt sie in Warenflussrichtung gesehen hintereinander auf dem Aufgabeband ab. Den leeren Einkaufswagen stellt er auf die Bodenwaage. Für die Warenerfassung werden die Waren entweder manuell dem Aufgabeband entnommen und an der Abtasteinrichtung vorbeigeführt, oder das Aufgabeband wird zum Zweck der Warenerfassung in Richtung der Abtasteinrichtung vorgeschoben, so dass die Waren eine nach der anderen die Abtasteinrichtung passieren und dabei erfasst werden. Der Kunde legt sie dann wieder in seinen Einkaufswagen.

Entsprechend einer bevorzugten Weiterbildung der vorgenannten Ausprägung des Erfindungsgedankens ist zwischen dem Aufgabeband und der Bandwaage eine Separierstation zum Vereinzeln der Ware angeordnet. Die Waren können dann in beliebiger Anordnung auf dem Aufgabeband abgelegt werden.

Nachfolgend wird die Erfindung an Hand zweier Ausführungsbeispiele in Verbindung mit den beigefügten Zeichnungen erläutert.

Es zeigt
- Fig. 1: ein erstes Ausführungsbeispiel eines Warenerfassungsplatzes in einer schematischen Seitenansicht,
- Fig. 2: ein zweites Ausführungsbeispiel eines Warenerfassungsplatzes in einer schematischen Seitenansicht.

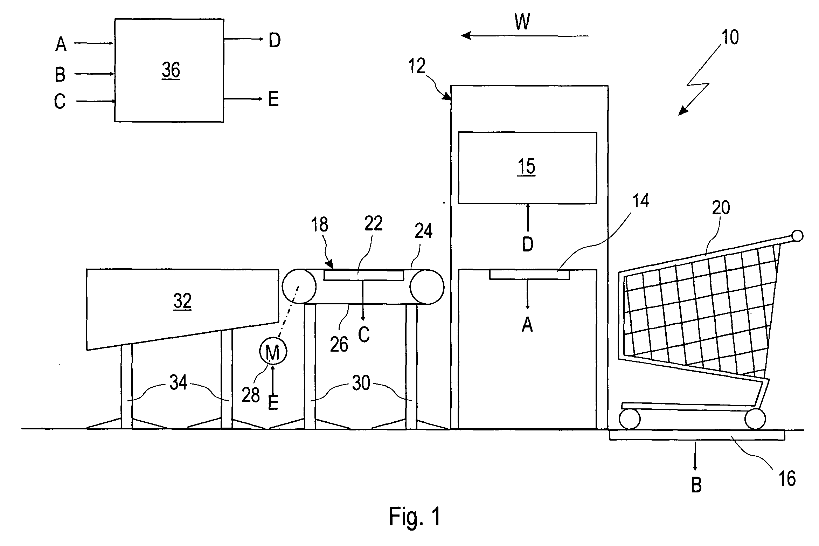

In Fig. 1 ist ein erstes Ausführungsbeispiel eines Warenerfassungsplatzes 10 in einer schematischen Seitenansicht dargestellt, wobei die Warenflussrichtung W von rechts nach links verläuft. Der Warenerfassungsplatz 10 umfasst eine Erfassungseinrichtung 12 mit einer Abtasteinrichtung 14 für Barcode-Etiketten und/oder RFID-Etiketten und einem Display 15, eine bezogen auf die Warenflussrichtung W vor der Abtasteinrichtung 14 angeordnete Bodenwaage 16 sowie hinter der Abtasteinrichtung 14 eine Bandwaage 18. Die Bodenwaage 16 ist mit einer hier nicht näher dargestellten Aufnahme für einen Einkaufswagen 20 ausgestattet.

Die Bandwaage 18 enthält eine Wägezelle 22, welche unter dem oberen Trumm 24 eines durch einen Elektromotor 28 antreibbaren Endlostransportbandes 26 angeordnet ist. Die Bandwaage 18 ist vorteilhafterweise auf einem ersten Fußgestell 30 angeordnet, dessen Höhe der Höhe der Abtasteinrichtung 14 angepasst ist. An die Bandwaage 18 schließt sich eine auf einem zweiten Fußgestell 34 angeordnete Packmulde 32 an. Es ist auch denkbar, mehrere Packmulden nebeneinander anzuordnen, denen eine Weiche vorgeordnet ist.

Die Abtasteinrichtung 14, das Display 15, die erste Bodenwaage 16 sowie die Wägezelle 22 und der Elektromotor der Bandwaage 18 sind mit einer Steuereinrichtung 36 verbunden.

Ein selbstbedienter Warenerfassungsvorgang mit dem ersten Warenerfassungsplatz 10 läuft wie folgt ab: Der mit den gesammelten Waren beladene Einkaufswagen 20 wird auf die Bodenwaage 16 geschoben. Hier wird das Gesamtgewicht B des beladenen Einkaufswagens 20 ermittelt und an die Steuereinrichtung 36 übermittelt. Die Waren werden einzeln dem Einkaufswagen 20 entnommen, an der Abtasteinrichtung 14 entlang geführt und anschließend auf der Bandwaage 18 abgelegt. Die aus dem Abtastergebnis ermittelte Gewichtsinformation A und das Wägeergebnis C der Bandwaage 18 werden ebenfalls an die Steuereinrichtung 36 übermittelt. Diese enthält einen Vergleicher, in dem das Gesamtgewicht aller Waren vor der Abtasteinrichtung 14 mit dem kumulierten Gesamtgewicht hinter der Abtasteinrichtung 14 und dem aus den Gewichtsinformationen aller Waren kumulierten Gewicht verglichen wird.

Alternativ wird die bei der Entnahme einer Ware von der Bodenwaage 16 registrierte Gewichtsverminderung mit dem von der Bandwaage 18 registrierten Gewicht und mit der Gewichtsinformation aus dem Abtastergebnis dieser Ware verglichen. Die Wareninformation wird ferner an ein Abrechnungssystem übermittelt, das nicht zu der vorliegenden Erfindung gehört und deshalb nicht beschrieben ist. Bei Übereinstimmung der drei vorgenannten Gewichtswerte innerhalb eines Toleranzbereichs wird an den Elektromotor 28 ein Signal E übermittelt, wodurch die Ware von dem Endlostransportband 26 in die Packmulde 32 transportiert wird. Bei fehlender Übereinstimmung wird der Kunde durch eine entsprechende Information D auf dem Sichtgerät 15 aufgefordert, die zuletzt erfasste Ware erneut zu erfassen und/oder es wird eine Information an die Aufsicht des Warenverkaufsgeschäfts gegeben. Nach dem Erfassen aller Waren wird der erste Einkaufswagen 20 an das der Erfassungseinrichtung 12 ferne Ende der Packmulde 32 geschoben und mit den darin befindlichen Waren beladen. Während dies geschieht, kann ein nächster Kunde bereits mit dem Erfassen seiner Waren beginnen.

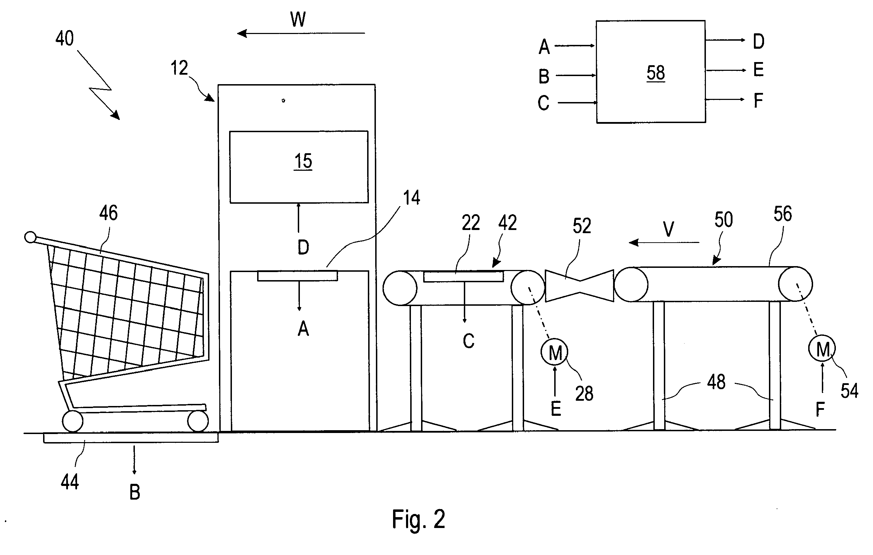

In Fig. 2 ist ein zweites Ausführungsbeispiel eines Warenerfassungsplatzes 40 in einer schematischen Seitenansicht dargestellt, wobei gleiche Komponenten wie in Fig. 1 mit den gleichen Bezugszeichen bezeichnet sind. Die Warenflussrichtung W verläuft wiederum von rechts nach links. Der Warenerfassungsplatz 40 umfasst eine Bedieneinrichtung 12 mit einer Abtasteinrichtung 14 für Barcode-Etiketten und/oder RFID-Etiketten und einem Display 15, eine vor der Abtasteinrichtung 14 angeordnete Bandwaage 42 sowie hinter der Abtasteinrichtung 14 eine Bodenwaage 44, die wiederum mit einer nicht näher dargestellten Aufnahme für einen Einkaufswagen 46 ausgestattet ist. Die Bandwaage 42 entspricht in ihrem Aufbau der Bandwaage 18.

Der Bandwaage 42 ist ein auf einem Fußgestell 48 angeordnetes Aufgabeband 50 vorgeordnet, wobei zwischen diesem und der Bandwaage 42 eine Separierstation 52 zum Vereinzeln der Waren eingefügt ist. Das Aufgabeband 50 weist ein durch einen zweiten Elektromotor 54 antreibbares Endlostransportband 56 auf. Das Fußgestell 48 ist so bemessen, dass die Höhe des Aufgabebandes 50 mit der Höhe der Bandwaage 42 übereinstimmt.

Die Abtasteinrichtung 14, das Display 15, die Wägezelle 22 und der Elektromotor 28 der Bandwaage 42, die Bodenwaage 44 sowie der zweite Elektromotor 54 sind mit einer Steuereinrichtung 58 verbunden.

Ein selbstbedienter Warenerfassungsvorgang mit dem Warenerfassungsplatz 40 läuft wie folgt ab: Ein mit den gesammelten Waren beladener Einkaufswagen 46 wird an das Aufgabeband 50 heran geschoben, alle Waren werden auf diesem abgelegt. Die Ablage kann in beliebiger Anordnung erfolgen. Danach wird der leere Einkaufswagen 46 auf die Bodenwaage 44 geschoben. Die Waren werden in der Separierstation 52 vereinzelt, so dass sie einzeln auf die Bandwaage 42 transportiert werden. Bei Verzicht auf eine Separierstation müssen die Waren in Vorschubrichtung V des Endlostransportbandes 56 von einander separiert eine nach der anderen auf dem Aufgabeband 50 abgelegt werden. Die Waren werden eine nach der anderen an dem Abtasteinrichtung 14 entlang geführt und können nach dem Erfassen in den leeren Einkaufswagen 46 gepackt werden. Die aus dem Abtastergebnis ermittelte Gewichtsinformation A und das Wägeergebnis C der Bandwaage 42 werden an die Steuereinrichtung 58 übermittelt. Gleiches geschieht mit der von der Bodenwaage 44 registrierten Gewichtsveränderung D. Die Steuereinrichtung 58 enthält wiederum einen Vergleicher, in dem das Gewicht aller Waren vor der Abtasteinrichtung 14 kumuliert und mit dem kumulierten Gesamtgewicht hinter der Abtasteinrichtung 14 und dem aus den Gewichtsinformationen aller Waren kumulierten Gewicht verglichen wird.

Alternativ wird das von der Bandwaage 42 ermittelte Gewicht mit der Gewichtsinformation aus dem Abtastergebnis dieser Ware und der von der Bodenwaage 44 registrierten Gewichtszunahme nach Ablegen der Ware in dem Einkaufswagen 46 verglichen. Die Wareninformation wird auch hier an ein Abrechnungssystem übermittelt. Bei Übereinstimmung der drei vorgenannten Gewichtswerte innerhalb eines Toleranzbereichs wird der erste Elektromotor 28 eingeschaltet, wodurch die nächste Ware von dem Aufgabeband 50 auf die zweite Bandwaage 42 transportiert wird. Bei Nichtübereinstimmung wird der Kunde durch eine entsprechende Information D auf dem Display 15 aufgefordert, die zuletzt erfasste Ware erneut zu erfassen und/oder es wird eine Information an die Aufsicht des Warenverkaufsgeschäfts gegeben.

Nach dem Erfassen aller Waren kann der Kunde seinen Einkaufswagen 46 sofort entfernen, so dass ein nachfolgender Kunde seinen Einkaufswagen auf die Bodenwaage 44 stellen kann.

## Patentansprüche

1. Selbstbedienter Warenerfassungsplatz mit einer Abtasteinrichtung (14) für Barcode-Etiketten und/oder RFID-Etiketten und jeweils zumindest einer Waage (16, 18; 42, 44) vor und hinter der Abtasteinrichtung (14), wobei eine der Waagen als Bodenwaage (16; 44) mit einer Aufnahme für einen Einkaufswagen (20; 46) und die andere Waage als Bandwaage (18; 42) ausgebildet ist.

2. Warenerfassungsplatz nach Anspruch 1, wobei die Bodenwaage (16) bezogen auf die Warenflussrichtung (W) vor der Abtasteinrichtung (14) und die Bandwaage (18) hinter der Abtasteinrichtung (14) angeordnet ist.

3. Warenerfassungsplatz nach Anspruch 2, wobei sich an die Bandwaage (18) eine Warensammelstelle (32) anschließt.

4. Warenerfassungsplatz nach Anspruch 3, wobei die Warensammelstelle (32) als Endlostransportband ausgebildet ist.

5. Warenerfassungsplatz nach Anspruch 3, wobei die Warensammelstelle (32) als Packmulde ausgebildet ist.

6. Warenerfassungsplatz nach Anspruch 4, wobei mehrere Packmulden vorgesehen sind und zwischen der Bandwaage (18) und den Packmulden eine Weiche angeordnet ist.

7. Warenerfassungsplatz nach Anspruch 1, wobei die Bandwaage (42) bezogen auf die Warenflussrichtung (W) vor der Abtasteinrichtung (14) und die Bodenwaage (44) hinter der Abtasteinrichtung (14) angeordnet ist.

8. Warenerfassungsplatz nach Anspruch 7, wobei vor der Bandwaage (42) ein Aufgabeband (50) angeordnet ist.

9. Warenerfassungsplatz nach Anspruch 8, wobei das Aufgabeband (50) zum Zweck der Warenerfassung in Richtung der Abtasteinrichtung (14) vorgeschoben wird.

10. Warenerfassungsplatz nach Anspruch 8 oder 9, wobei zwischen dem Aufgabeband (50) und der Bandwaage (42) eine Separierstation (52) angeordnet ist.

11. Verfahren zur Erfassung von Waren an einem Warenerfassungsplatz nach einem oder mehreren der Ansprüche 1 bis 10, **dadurch gekennzeichnet, dass** die gesammelten Waren auf der vor der Abtasteinrichtung (14) angeordneten Waage (16; 42) gewogen werden, einzeln an der Abtasteinrichtung (14) entlang geführt und auf der hinter der Abtasteinrichtung (14) angeordneten Waage (18; 44) abgelegt werden und in einem Vergleicher das Gesamtgewicht vor der Abtasteinrichtung (14) mit dem kumulierten Gewicht aller Waren hinter der Abtasteinrichtung (14) sowie mit dem aus dem Abtastergebnis ermittelten Gewichtsinformation verglichen wird, und/oder die bei der Entnahme einer Ware von der vor der Abtasteinrichtung (14) angeordneten Waage (16; 42) registrierte Gewichtsverminderung mit dem von der hinter der Abtasteinrichtung (14) angeordneten Waage (18; 44) registrierten Gewicht verglichen wird.
